# EUROPEAN PATENT SPECIFICATION

(11) **EP 4 462 525 B1**
(45) Date of publication and mention of the grant of the patent: **09.04.2025**
(21) Application number: 23172692.8
(22) Date of filing: 11.05.2023
(51) Int. Cl.: H01M 8/04089, H01M 8/04082

(54) **FUEL CELL SYSTEM AND AIRCRAFT HAVING AN INERTING SYSTEM**
BRENNSTOFFZELLENSYSTEM UND FLUGZEUG MIT EINEM INERTISIERUNGSSYSTEM
SYSTÈME DE PILE À COMBUSTIBLE ET AÉRONEF COMPORTANT UN SYSTÈME D'INERTAGE

(43) Date of publication of application: 13.11.2024
(73) Proprietor: Airbus Operations GmbH, 21129 Hamburg (DE)
(72) Inventor: Becks, Ralf, 21129 Hamburg (DE)
(74) Representative: Schornack, Oliver

(56) References cited:
- EP-B1- 2 282 935
- EP-B1- 3 269 647
- EP-B1- 3 362 361
- US-A1- 2022 131 165

## Description

The present disclosure generally relates to a fuel cell system having an inerting system and an aircraft comprising such fuel cell system. Particularly, the present disclosure relates to a fuel cell system, wherein a shroud surrounds a fuel distribution pipe and an inerting system generates nitrogen enriched air that is conducted into the shroud. Furthermore, an aircraft having such fuel cell system is also disclosed.

A conventional fuel cell system comprises a hydrogen distribution, such as one or more pipes conducting hydrogen. Since hydrogen may leak or permeate from the hydrogen distribution, venting of the hydrogen distribution is required. Some systems provide a shrouded pipe, in order to collect any leaked or permeated hydrogen.

The documents US2022131165, EP2282935, EP3 362361 and EP3269647 disclose fuel cell systems comprising a hydrogen disribution.

However, a sensor system in the shrouded pipe is required, in order to detect a hydrogen level in the shroud. Otherwise, accumulation of hydrogen may increase the risk of an explosive mixture and/or an uncontrolled burning of the hydrogen.

It is therefore an object of the present disclosure to provide an improved fuel cell system, particularly a more secure fuel cell system.

This object is solved by the present invention as defined in the independent claims. Preferred embodiments are defined by the dependent claims.

According to a first aspect to better understand the present disclosure, a fuel cell system comprises a fuel cell, a fuel tank, a fuel distribution pipe fluidly connecting the fuel tank with a fuel inlet of the fuel cell, and a shroud surrounding at least a portion of the fuel distribution pipe. Thus, the shroud encases the fuel distribution pipe (i.e., forms a shrouded pipe for fuel distribution) and allows catching or collecting hydrogen leaking or permeating from the fuel distribution pipe.

It is to be understood that the fuel cell system may comprise more than one fuel tank and/or more than one fuel cell, so that more than one fuel distribution pipe is present in the system, together forming a fuel distribution. Any portion of the fuel distribution or the entire fuel distribution (all fuel distribution pipes) can be equipped with such shroud.

Furthermore, the fuel cell system comprises an inerting system configured to generate nitrogen enriched air (NEA) and oxygen enriched air (OEA). Such inerting system can be any system receiving an air stream and splitting the air stream into a first portion containing more nitrogen than the received air stream, and a second portion containing more oxygen than the received air stream.

The fuel cell system also comprises an NEA pipe conducting the nitrogen enriched air into the shroud. Thus, the fuel distribution pipe is surrounded by nitrogen enriched air. In other words, a shrouded pipe for fuel distribution is formed that surrounds the actual fuel pipe with a gas containing less or no oxygen. Any fuel, such as hydrogen, methane or other fuel for a fuel cell, leaking or permeating from the fuel distribution pipe will not come into contact with oxygen. Therefore, the risk of having a critical mixture of fuel and oxygen (eventually leading to burning of the fuel or an explosion) is significantly reduced.

Furthermore, since the inerting system can continuously generate nitrogen enriched air, a flow of NEA through the shroud can be achieved. This flow of NEA is venting or transporting any fuel leaking or permeating out of the fuel distribution pipe outboard of the fuel distribution by the NEA flow. Thus, there is no need for a fuel detection system inside the shroud.

In an implementation variant, the fuel cell system can further comprise an OEA pipe conducting the oxygen enriched air (from the inerting system) to an oxidiser inlet of the fuel cell. Thus, oxygen enriched air allows a performance increase of the fuel cell compared to providing normal air to the oxidiser inlet of the fuel cell. The fuel cell system, hence, can be operated more efficiently and more secure. At the same time, the overall weight of the fuel cell system may only slightly increase. That is, the inerting system may increase the overall weight, while the fuel cell itself may be designed smaller and, hence, lighter due to the higher efficiency.

In another implementation variant, the fuel cell system can comprise a pressure sensor in the fuel distribution pipe. If the pressure sensor indicates a pressure drop, a leakage of fuel from the fuel distribution pipe can be detected. Such pressure sensor may already be included in a conventional fuel cell system, for example, for sensing a fuel pressure at a fuel inlet of the fuel cell.

In a further implementation variant, the inerting system can be supplied with pressurised air. This allows operating the inerting system with higher efficiency and larger output flows of NEA and OEA.

In yet a further implementation variant, the fuel tank can store hydrogen. Hydrogen is a very volatility gas and can leak or permeate more easily from a fuel distribution pipe compared to other gases. Thus, the disclosed fuel cell system is particularly secure for hydrogen operated fuel cells.

According to a second aspect to better understand the present disclosure, an aircraft comprises at least one fuel cell system according to the first aspect or one of its variants. As a mere example, the aircraft may employ the fuel cell to generate electricity for operating certain control components of the aircraft.

In an implementation variant, the aircraft can further comprise an engine supplied with energy generated by the fuel cell. For example, the fuel cell can generate electricity, which is used to drive an electric motor propelling the aircraft.

In another implementation variant, the aircraft can further comprise a liquid fuel tank, and an engine supplied with liquid fuel from the liquid fuel tank. The liquid fuel in the liquid fuel tank can be kerosene, gasoline, diesel or the like. Thus, the engine of the aircraft can be a conventional motor and/or jet engine of an aircraft. As a mere example, the liquid fuel tank can be arranged in the wings of the aircraft.

Furthermore, the fuel cell system can further comprise a further NEA pipe conducting nitrogen enriched air from the inerting system into the liquid fuel tank. Thus, the further NEA pipe is different from the NEA pipe conducting the nitrogen enriched air into the shroud.

In any case, the inerting system can be a conventional inerting system in the aircraft, that is installed to fill the liquid fuel tank with NEA. Thus, the inerting system can be additionally used for the fuel cell system, so that an efficient operation of the aircraft is possible. Likewise, the OEA from the inerting system can be employed to operate the fuel cell in a more efficient manner due to the higher level of oxygen.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a fuel cell system; and
- Figure 2: schematically illustrates an aircraft having a fuel cell system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

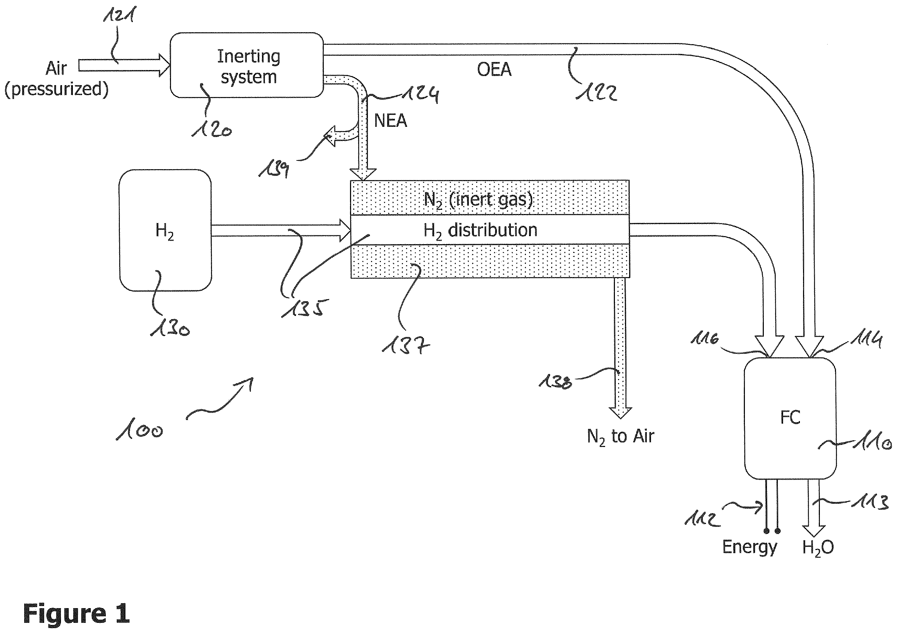

Figure 1 schematically illustrates a fuel cell system 100 comprising a fuel cell 110. The fuel cell 110 is configured to perform an electrochemical reaction, where fuel and an oxidiser react, such as hydrogen and oxygen, or methane, propane or other liquid or gaseous fuel reacting with oxygen from the oxidiser, and electric energy is generated and supplied by the fuel cell 110. For instance, the fuel cell 110 has an oxidiser inlet 114 and a fuel inlet 116. Furthermore, the fuel cell 110 has an energy terminal 112 and/or water outlet 113 (illustrated as one outlet for increased gravity).

Furthermore, the fuel cell system 100 comprises a fuel tank 130, such as the illustrated hydrogen tank 130. The fuel tank 130 is fluidly connected to the fuel cell 110, particularly the fuel inlet 116, via a fuel distribution pipe 135. It is to be noted, that the fuel distribution pipe 135 can extend from the fuel tank 130 to the fuel inlet 116 of the fuel cell 110 irrespective of its illustrated size, which is for explanation purposes only.

The fuel cell system 100 comprises a shroud 137 surrounding at least a portion of the fuel distribution pipe 135. In other words, the fuel from the fuel tank 130 is flowing through a shrouded pipe 135/137 to the fuel inlet 116 of the fuel cell 110. The shroud 137 forms an interior space between the fuel distribution pipe 135 and the shroud 137, wherein any fuel leaking or permeating through the fuel distribution pipe 135 can be collected and accumulated.

In addition, the fuel cell system 100 comprises an inerting system 120 configured to generate nitrogen enriched air (NEA) and oxygen enriched air (OEA). Such inerting system 120 can be any conventional inerting system 120. As a mere example, at an inlet 121 the inerting system 120 is provided with air, for example pressurised air. The inerting system 120 comprises respective outlets for NEA and OEA.

The fuel cell system 100 comprises an OEA pipe 122 and an NEA pipe 124 respectively conducting the oxygen enriched air and the nitrogen enriched air generated by the inerting system 120. For instance, the NEA pipe 124 conducts the nitrogen enriched air (NEA) into the shroud 137. This allows surrounding the fuel distribution pipe 135 with nitrogen enriched air, i.e., oxygen reduced air, which significantly reduces the risk of an explosive mixture of fuel and oxygen, if fuel leaks or permeates through the fuel distribution pipe 135.

In order to detect a leakage or fuel permeating from the fuel distribution pipe 135, a pressure sensor (not explicitly illustrated) can be provided, for example, at the fuel inlet 116 of the fuel cell 110. Such pressure sensor may be required anyway for the normal operation of the fuel cell 110, in order to provide a sufficient amount of fuel depending on the operating state of the fuel cell 110.

In addition, the fuel cell system 100 can include an NEA exhaust pipe 138 conducting NEA from the shroud 137 into the ambient environment or another component capable of dealing with NEA that may include (small) portions of fuel leaked or permeated from the fuel distribution pipe 135. Since the inerting system 120 can continuously generate NEA that is guided through the shroud 137 and through the NEA exhaust pipe 138, a continuous flow of NEA conveying any leaked or permeated fuel away from the fuel distribution pipe 135 can be achieved. This further increases security of the fuel cell system 100.

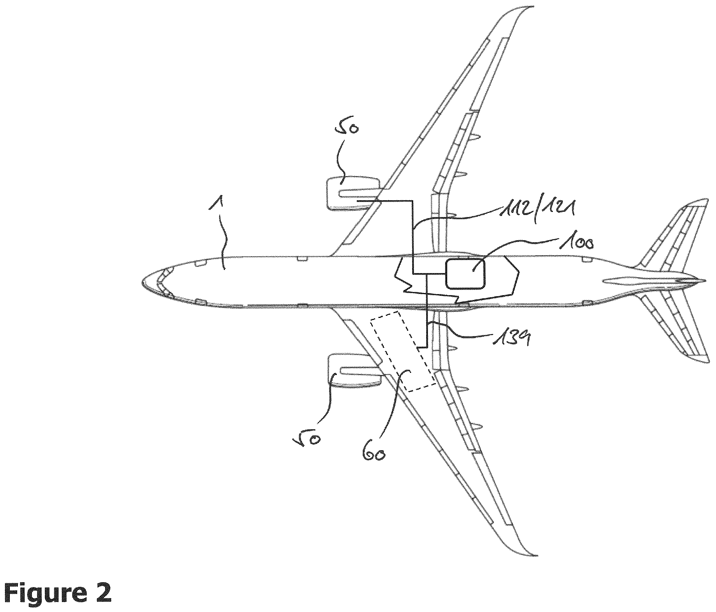

Figure 2 schematically illustrates an aircraft 1 comprising such fuel cell system 100. The aircraft 1 can comprise an engine 50 that is applied with energy generated by the fuel cell 110. Figure 2 illustrates a connection between the engine 50 and the fuel cell system 100 with a single line, which can represent an electric connection between the fuel cell terminal 112 and the engine 50.

Alternatively or additionally, the aircraft 1 can comprise an engine 50 and a liquid fuel tank 60, wherein the engine 50 is supplied with liquid fuel from the liquid fuel tank 60 (such liquid fuel pipe is not illustrated in Figure 2 for brevity reasons). It is to be understood that more than one liquid fuel tank 60 can be provided. Figure 2 illustrates only one liquid fuel tank 60 for brevity reasons. Thus, a conventional propeller and/or jet engine 50 can be employed in the aircraft 1. The inerting system 120 of the fuel cell system 100 can be used to generate NEA that is conducted into the liquid fuel tank 60. Such inerting system 120 is common in a majority of aircrafts 1 having a liquid fuel tank 60.

Furthermore, the inerting system 120 can be provided with pressurised air from the engine 50, such as bleed air from jet engine 50. Such pressurised air is separated by the inerting system 120 into NEA and OEA.

The NEA conducted into the liquid fuel tank 60 may be provided separately from the shroud 137, for example, directly from the NEA outlet 124 of the inerting system 120 via further NEA pipe 139 (Figure 1). Figure 2 illustrates only one pipe between the liquid fuel tank 60 and the fuel cell system 100 for brevity reasons, although more pipes and lines may be provided.

Thus, weight, energy and resource synergies can be leveraged in the aircraft 1. For instance, no additional inerting system 120 is required for the fuel cell system 100, in case of a liquid fuel propelled aircraft 1. Moreover, electric energy can be generated by the fuel cell 110 in the aircraft 1 in a more secure manner.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A fuel cell system (100), comprising:
a fuel cell (110);
a fuel tank (130);
a fuel distribution pipe (135) fluidly connecting the fuel tank (130) with a fuel inlet (116) of the fuel cell (110);
a shroud (137) surrounding at least a portion of the fuel distribution pipe (135);
an inerting system (120) configured to generate nitrogen enriched air, NEA, and oxygen enriched air, OEA; and
an NEA pipe (124) conducting the nitrogen enriched air into the shroud (137).

2. The fuel cell system (100) of claim 1, further comprising:
an OEA pipe (122) conducting the oxygen enriched air to an oxidiser inlet (114) of the fuel cell (110).

3. The fuel cell system (100) of claim 1 or 2, wherein the inerting system (120) is supplied with pressurised air (121).

4. The fuel cell system (100) of one of claims 1 to 3, wherein the fuel tank (130) stores hydrogen.

5. An aircraft (1), comprising:
at least one fuel cell system (100) of one of claims 1 to 4.

6. The aircraft (1) of claim 5, further comprising:
an engine (50) supplied with energy generated by the fuel cell (110).

7. The aircraft (1) of claim 5, further comprising:
a liquid fuel tank (60); and
an engine (50) supplied with liquid fuel from the liquid fuel tank (60),
wherein the inerting system (120) of the fuel cell system (100) further comprises a further NEA pipe (139) conducting nitrogen enriched air into the liquid fuel tank (60).

## Patentansprüche

1. Brennstoffzellensystem (100), umfassend:
eine Brennstoffzelle (110);
einen Brennstofftank (130);
ein Brennstoffverteilungsrohr (135), das den Brennstofftank (130) mit einem Brennstoffeinlass (116) der Brennstoffzelle (110) fluidisch verbindet;
eine Verkleidung (137), die mindestens einen Teil des Brennstoffverteilungsrohrs (135) umgibt;
ein Inertisierungssystem (120), das dazu ausgelegt ist,
stickstoffangereicherte Luft, NEA, und sauerstoffangereicherte Luft, OEA,
zu erzeugen; und
ein NEA-Rohr (124), das die stickstoffangereicherte Luft in die Verkleidung (137) leitet.

2. Brennstoffzellensystem (100) nach Anspruch 1, ferner umfassend:
ein OEA-Rohr (122), das die sauerstoffangereicherte Luft zu einem Oxidatoreinlass (114) der Brennstoffzelle (110) leitet.

3. Brennstoffzellensystem (100) nach Anspruch 1 oder 2, wobei das Inertisierungssystem (120) mit Druckluft (121) versorgt wird.

4. Brennstoffzellensystem (100) nach einem der Ansprüche 1 bis 3, wobei der Brennstofftank (130) Wasserstoff speichert.

5. Flugzeug (1), umfassend:
mindestens ein Brennstoffzellensystem (100) nach einem der Ansprüche 1 bis 4.

6. Flugzeug (1) nach Anspruch 5, ferner umfassend:
einen Motor (50), der mit Energie versorgt wird, die durch die Brennstoffzelle (110) erzeugt wird.

7. Flugzeug (1) nach Anspruch 5, ferner umfassend:
einen Flüssigbrennstofftank (60); und
einen Motor (50), der mit Flüssigbrennstoff aus dem Flüssigbrennstofftank (60) versorgt wird,
wobei das Inertisierungssystem (120) des Brennstoffzellensystems (100) ferner ein weiteres NEA-Rohr (139) umfasst, das stickstoffangereicherte Luft in den Flüssigbrennstofftank (60) leitet.

## Revendications

1. Système (100) de pile à combustible, comprenant:
une pile à combustible(110);
un réservoir de combustible(130);
une conduite de distribution de combustible (135) reliant fluidiquement le réservoir de combustible (130) à une entrée de combustible (116) de la pile à combustible (110);
une enveloppe (137) entourant au moins une partie de la conduite de distribution de combustible (135);
un système d'inertage (120) configuré pour générer de l'air enrichi en azote, noté NEA, et de l'air enrichi en oxygène, noté OEA; et
une conduite de NEA (124) amenant l'air enrichi en azote dans l'enveloppe (137).

2. Système (100) de pile à combustibleselon la revendication1, comprenant en outre:
une conduite d'OEA (122) amenant l'air enrichi en oxygène à une entrée de comburant (114) de la pile à combustible (110).

3. Système (100) de pile à combustible selon la revendication 1 ou 2, dans lequel le système d'inertage (120) est alimenté en air sous pression (121).

4. Système (100) de pile à combustible selon l'une quelconque des revendications 1 à 3, dans lequel le réservoir de combustible (130) stocke de l'hydrogène.

5. Aéronef(1), comprenant:
au moins un système (100) de pile à combustible selon l'une des revendications 1 à 4.

6. Aéronef (1) selon la revendication 5, comprenant en outre:
un moteur (50) alimenté en énergie générée par la pile à combustible (110).

7. Aéronef (1) selon la revendication 5, comprenant en outre:
un réservoir de combustible liquide (60); et
un moteur (50) alimenté en combustible liquide provenant du réservoir de combustible liquide (60),
dans lequel le système d'inertage (120) du système (100) de pile à combustible comprend en outre une autre conduite de NEA (139) amenant de l'air enrichi en azote dans le réservoir de combustible liquide (60).
